# FASCICULE DE BREVET EUROPEEN

(11) **EP 2 335 263 B1**
(45) Date de publication et mention de la délivrance du brevet: **30.05.2012**
(21) Numéro de dépôt: 09784172.0
(22) Date de dépôt: 22.01.2009
(51) Int. Cl.: H01H 71/08, H01R 9/26, H02B 1/20, H01R 13/22, H01R 13/24

(54) **DISPOSITIF ET ENSEMBLE COULISSANT DE CONNEXION ELECTRIQUE, EN PARTICULIER POUR BLOC DE PROTECTION DIFFERENTIELLE**
ELEKTRISCHE VERBINDUNGSEINRICHTUNG UND SCHIEBEBAUGRUPPE, INSBESONDERE FÜR EINE DIFFERENZ-SCHUTZEINHEIT
ELECTRIC CONNECTION DEVICE AND SLIDING ASSEMBLY, IN PARTICULAR FOR A DIFFERENTIAL PROTECTION UNIT

(30) Priorité: 09.10.2008 FR 0805583
(43) Date de publication de la demande: 22.06.2011
(73) Titulaire: Schneider Electric Industries SAS, 92500 Rueil-Malmaison (FR)
(72) Inventeur: LEBEAU, Bernard, F-38190 le Champ Prés Froges (FR); CHANSAVANG, Albert, 38050 Grenoble Cedex 9 (FR)
(74) Mandataire: Péru, Laurence
(86) Numéro de dépôt international: PCT/FR2009/000067
(87) Numéro de publication internationale: WO 2010/040906

(56) Documents cités:
- EP-A- 1 244 123
- EP-A- 1 278 224
- DE-A1-102006 060 569
- FR-A- 2 765 407
- JP-A- 56 001 422

## Description

### DOMAINE TECHNIQUE

L'invention trouve une application particulière pour l'assemblage entre deux appareils électriques disposés côte à côte sur un rail dans une armoire, notamment un bloc déclencheur différentiel associé à un disjoncteur, chacun des appareils étant accolé au niveau d'une face latérale et comprenant des bornes de raccordement par pôle sur une face orthogonale à la face d'accolement.

L'invention concerne notamment un dispositif permettant la connexion rapide, par embrochage, d'un appareil électrique à une borne à cage ouverte classique, c'est-à-dire une borne comprenant une plage de raccordement plane localisée dans un orifice débouchant. Plusieurs dispositifs de connexion peuvent être associés pour permettre un raccordement simultané d'une pluralité de bornes d'un appareillage électrique.

L'invention est également relative à un appareil, comme un bloc de protection à courant différentiel résiduel, ou bloc différentiel, muni d'un accessoire dont une partie comprenant des dispositifs de connexion coulisse, pour permettre les raccordements électriques et mécaniques successifs.

### ETAT DE LA TECHNIQUE

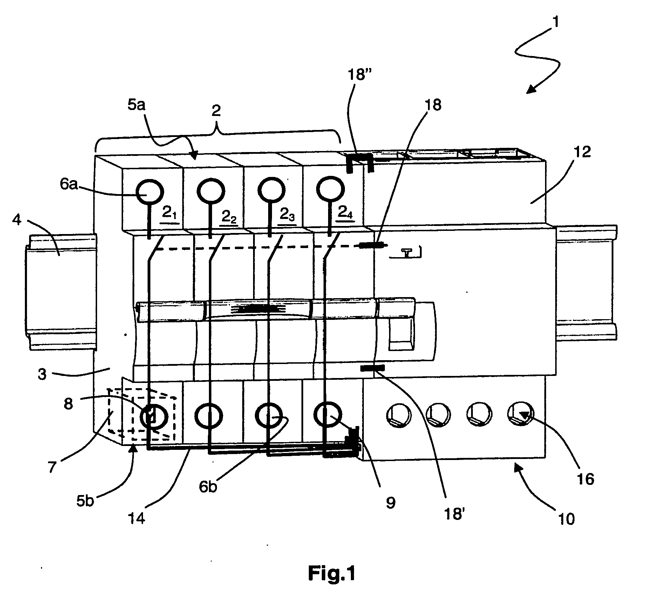

Dans le système 1 de protection illustré en figure 1, un appareil de protection électrique 2 est, de manière connue en soi, logé dans un boîtier 3 de forme sensiblement parallélépipédique et destiné à être monté sur un rail de montage 4. Deux faces opposées 5a, 5b situées de part et d'autre du rail 4, comportent respectivement des bornes d'entrée 6a et des bornes de sortie 6b pour raccordement au circuit électrique à protéger. Chaque borne 6 est usuellement du type à cage et comprend un orifice 7, sensiblement rectangulaire et de dimensions connues, débouchant sur une face 5 du disjoncteur 2, dans lequel est accessible une plage 8 sensiblement plane de raccordement qui s'étend le long d'une surface interne de l'orifice 7. Usuellement, un passage 9 sur la paroi opposée à la plage 8, classiquement sur la paroi frontale du disjoncteur 2, permet l'accès à une vis qui peut serrer orthogonalement un conducteur inséré dans l'orifice 7 sur la plage 8 pour assurer un raccordement électrique fiable.

Cet appareil de protection 2 peut être associé à d'autres appareillages 10, comme un bloc de déclenchement différentiel, également logés dans un boîtier 12 de forme similaire à l'appareil de protection 2 et destinés à être montés sur le rail de montage 4 à ses côtés pour y être couplés électriquement et mécaniquement. Le raccordement électrique des deux modules 2, 10 est réalisé par l'intermédiaire de conducteurs 14 faisant saillie du boîtier 12 du bloc différentiel 10 pour être raccordés électriquement aux bornes de sortie 6b du disjoncteur 2 : avant montage définitif sur le rail 4, deux faces appartenant respectivement au disjoncteur 2 et au bloc 10 sont accolées l'une à l'autre, puis des organes d'accouplement sont mis en oeuvre pour une solidarisation et un couplage mécaniques avant de réaliser le raccordement électrique des deux appareils borne par borne.

Pour améliorer et accélérer le processus de montage, les documents EP 0 806 784 ou EP 1 000 430 décrivent un bloc de protection différentiel comportant un support destiné à loger ses conducteurs de l'appareil différentiel et s'étendant en regard des bornes du disjoncteur de façon décalée lors du couplage mécanique : le support et les conducteurs sont mobiles par rapport au boîtier du bloc différentiel, perpendiculairement au rail, entre une position ouverte dans laquelle le support est éloigné du boîtier du disjoncteur et les conducteurs non engagés dans les bornes du disjoncteur, et une position rétractée dans laquelle le support est rapproché du boîtier du disjoncteur et les conducteurs insérés dans les bornes de sortie du disjoncteur ; inversement, le couplage électrique peut être réalisé préalablement au couplage mécanique. Le disjoncteur 2 et le bloc 10 sont ainsi couplés mécaniquement et électriquement en deux mouvements de translation successifs, par mise en oeuvre des moyens adaptés.

Au vu des problèmes de résistance au courant de court-circuit pendant la durée d'ouverture du disjoncteur 2, le raccordement électrique est finalisé par serrage des vis dans les orifices 9, et l'embrochage simple de conducteurs 14 dans des bornes 6 du disjoncteur 2 n'est pas utilisé : l'intensité du courant pouvant y circuler provoque une répulsion entre conducteur 14 et plage 8 de la borne 6, pouvant générer des arcs électriques et donc détériorer l'ensemble. Une solution a été proposée dans le document EP 1 278 224, dans laquelle la cage de la borne est aménagée pour limiter les effets de répulsion ; cependant, l'ensemble ainsi réalisé est complexe à mettre en oeuvre et coûteux, et nécessite notamment des modifications des disjoncteurs 2 dédiés au bloc de protection différentielle 10.

Ainsi, si le procédé de montage d'un bloc différentiel 10 sur un disjoncteur 2 a été amélioré en ce qui concerne la mise en place des deux appareils l'un par rapport à l'autre, une étape de vissage pour chacun des conducteurs 14 dans sa borne 6 demeure. Outre sa longueur et sa non-uniformité en ce qui concerne le couple de serrage appliqué, cette opération nécessite une vérification régulière, avec notamment un resserrage, pour garantir une fiabilité du raccordement électrique. Le document FR-A-2765 407 divulgue un dispositif selon le préambule de la revendication 1.

### EXPOSE DE L'INVENTION

Parmi autres avantages, l'invention vise à pallier des inconvénients du couplage entre un bloc de protection différentielle et un disjoncteur, en facilitant la connexion électrique. Plus généralement, l'invention s'applique pour le raccordement électrique sur toute borne à cage ouverte d'un appareillage électrique, une telle borne comprenant une plage de raccordement s'étendant dans un orifice de passage d'un conducteur.

En particulier, l'invention concerne un dispositif de connexion électrique, de forme adaptée à la borne dans laquelle il doit être inséré, comprenant un conducteur d'extrémité plane venant face à la plage de raccordement de la borne, deux protubérances au moins sur la surface plane assurant le contact entre plage et conducteur tout en les maintenant séparés l'un de l'autre. De préférence, deux protubérances seulement, si possible identiques, sont disposées dans le sens d'insertion dans la cage, c'est-à-dire alignées et successives dans la chaîne de conduction du conducteur. Le dispositif comprend en outre des moyens faisant ressort pour contraindre la partie d'extrémité du conducteur vers la plage et garantir le contact, la contrainte étant de préférence localisée au milieu des deux protubérances ; avantageusement, un doigt isolant rigide solidarise le conducteur et les moyens faisant ressort entre eux. De préférence, le doigt de maintien est de forme similaire à celle de la cage de la borne, et en particulier parallélépipédique rectangle avec une face latérale munie de moyens de type évidement pour loger la première partie d'extrémité du conducteur ; le logement des moyens faisant ressort peut être une cavité centrale débouchant sur la face latérale opposée et les moyens faisant ressort sont de préférence de type à lame, par exemple une lame ressort centrée sur un pion, exerçant une force sensiblement normale à la partie d'extrémité du conducteur.

Pour faciliter les raccordements, de préférence, le conducteur du dispositif de connexion se prolonge dans une direction sensiblement orthogonale à la plage de raccordement, et notamment le conducteur est plié à angle droit pour former une deuxième partie. Selon l'utilisation, il peut être avantageux que la deuxième partie se prolonge par une troisième partie orthogonale permettant une connexion avec un deuxième appareil électrique localisé côte à côte avec l'appareil comprenant les bornes à raccorder.

Selon un mode de réalisation préféré de l'invention, un ensemble de connexion comprend une pluralité de dispositifs de connexion, avantageusement similaires, maintenus entre eux dans une position stable par un socle, par exemple une plaque plane munie d'orifices de passage des doigts de maintien. Cette configuration, par exemple adaptée en un système de répartition, permet un raccordement simultané d'une pluralité de bornes. De préférence, un mouvement relatif est toléré entre les différents dispositifs de connexion, par exemple un débattement angulaire et/ou un jeu latéral, de façon à accepter un désalignement entre les bornes et les dispositifs de connexion de l'ensemble.

Selon l'invention, avantageusement, des moyens permettent une connexion mécanique avec insertion orthogonale à un raccordement électrique par insertion. En particulier, un accessoire comprend un socle duquel font saillie des conducteurs à raccorder électriquement dans des bornes d'un appareil électrique, et un support par rapport auquel le socle coulisse. Les conducteurs comprennent une première portion solidaire du socle, notamment en tant qu'élément d'un dispositif de connexion par embrochage tel que précédemment présenté, et une deuxième portion solidaire du support, les deux portions pouvant être reliées entre elles par tout moyen permettant leur mouvement relatif. Notamment, l'accessoire peut se greffer sur un deuxième appareil électrique de type bloc différentiel, la deuxième portion des conducteurs étant directement reliée aux conducteurs du deuxième appareil et l'accessoire permettant un mouvement latéral de translation de la première portion des conducteurs pour écarter le premier appareil à raccorder.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1, déjà décrite, illustre un système de protection électrique comprenant un bloc de protection différentielle associé à un disjoncteur modulaire, dans lequel un dispositif de connexion électrique selon l'invention peut être utilisé.
Les figures 2A à 2E montrent un dispositif de connexion électrique selon un mode de réalisation préféré de l'invention ainsi que ses différents composants et son raccordement dans une borne à cage.
La figure 3 représente un bloc de protection différentielle selon un mode de réalisation préféré de l'invention.
La figure 4 montre la connexion entre deux appareillages selon un mode de réalisation préféré de l'invention.

### DESCRIPTION DETAILLEE D'UN MODE DE REALISATION PREFERE

Dans un tableau et/ou une armoire électrique, le système de protection électrique 1 est usuellement mis en place sur des rails horizontaux 4, tel qu'illustré en figure 1. Dans la suite de la description, les différents termes de position (« haut », « inférieur »,...) seront utilisés relativement à cette position d'utilisation, mais il est entendu qu'ils ne sont en rien restrictifs.

Le système de protection 1 comprend, dans un mode de réalisation préféré, un disjoncteur 2 tétrapolaire de quatre modules similaires 2₁, 2₂, 2₃, 2₄, montés côte à côte sur le rail 4 et solidarisés entre eux ; chaque module est logé dans un boîtier 3 et comporte de part et d'autre du rail 4, une borne 6a, 6b de raccordement des conducteurs du disjoncteur 2. Le système de protection 1 comprend en outre un bloc différentiel 10 logé dans un boîtier 12 de section similaire à celle des modules 2.

Tel qu'il est connu (voir par exemple EP 0 375 568 ou EP 0 926 695), le bloc déclencheur 10 renferme un transformateur à noyau torique sur lequel sont bobinés des enroulements primaires reliés à chaque borne 16 du bloc 10, localisée du même côté que les bornes de sortie 6b du disjoncteur 2, et un enroulement secondaire connecté électriquement à un relai de déclenchement coopérant avec un mécanisme de commande du disjoncteur 2. Les enroulements primaires sont prolongés par des conducteurs primaires 14, formés par des fils rigides en cuivre sur leur majeure partie, pour connexion dans les bornes 6b du disjoncteur 2. Les conducteurs de liaison 14 forment donc sensiblement un U, entre une extrémité libre insérée dans les cages 7 ouvertes des bornes 6 du disjoncteur 2 et une extrémité prolongeant l'enroulement primaire.

Le disjoncteur 2 et le bloc différentiel 10 sont couplés électriquement par les conducteurs primaires 14 dans un plan perpendiculaire à la direction du rail 4. Une liaison mécanique, usuellement inviolable, est en outre réalisée afin d'assurer le bon fonctionnement et la fiabilité du système de protection 1 : en particulier, des moyens de déclenchement et de réarmement 18, de type barre ou aiguille, traversent les faces latérales accolées des deux appareils 2, 10 ; des picots de centrage et/ou détrompage 18' peuvent être mis en place sur les mêmes faces ; un élément de verrouillage 18" est de façon usuelle placé sur la face frontale.

Tel qu'il découle clairement de la figure 1, les connexions mécaniques et électriques entre les deux éléments 2, 10 du système de protection 1 sont ainsi réalisées par emboîtements partiels dans deux directions orthogonales : les deux étapes doivent donc être réalisées l'une après l'autre ; selon un mode de réalisation préféré de l'invention, la connexion électrique est réalisée en premier lieu.

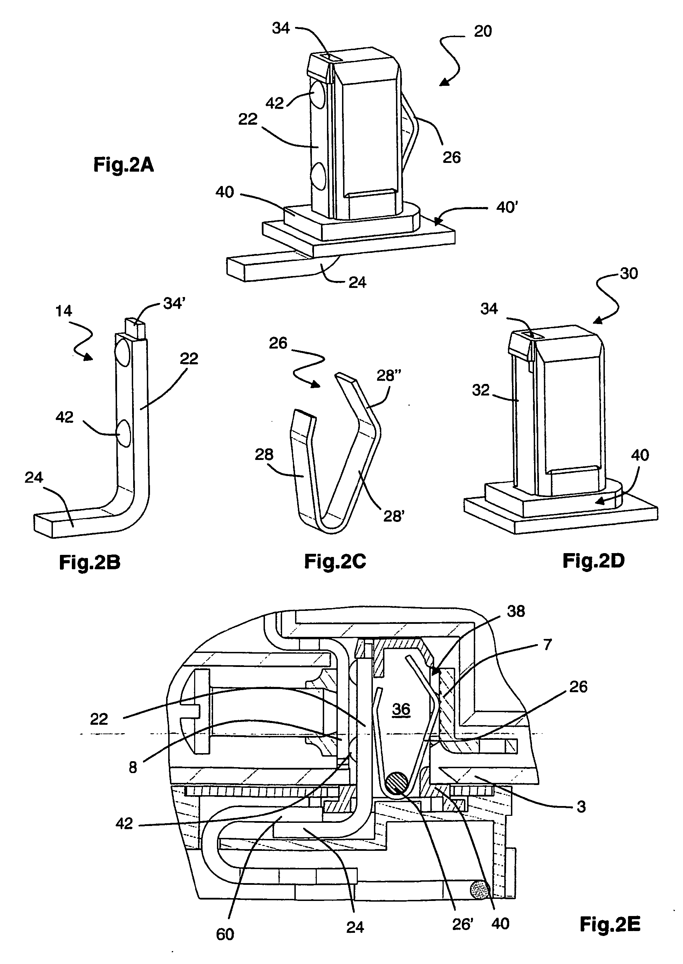

Pour faciliter le procédé d'assemblage, selon l'invention, la connexion électrique est réalisée par l'intermédiaire de dispositifs embrochables 20 qui peuvent être utilisés directement dans les bornes 6 à cage ouverte standardisées, que la cage soit fixe ou mobile. En particulier, le dispositif de connexion 20 selon l'invention est tel qu'il se maintient de lui-même dans l'orifice 7, et il n'est pas nécessaire de serrer le conducteur 14 sur la plage 8, ledit dispositif 20 illustré en figure 2A étant agencé pour tolérer des courants forts, notamment de court-circuit, et compenser leurs effets répulsifs sans que le contact avec la plage 8 ne soit rompu.

Tel qu'illustré en figure 2B, le conducteur 14 du dispositif de connexion 20 selon un mode de réalisation préféré de l'invention comprend une première partie d'extrémité 22 sensiblement plane qui est partiellement introduite dans la borne à cage 6. Les dimensions de la première partie d'extrémité 22 ainsi que sa composition sont adaptées aux bornes 6 (c'est-à-dire notamment aux plages 8, ainsi qu'à la taille des orifices 7) et à l'intensité du courant pouvant y circuler, et notamment le conducteur 22 peut être en cuivre, aluminium ou acier de section de l'ordre de 2x4 mm pour un calibre de 25 A. De préférence, afin notamment d'optimiser l'encombrement dans l'armoire, la première partie 22 du conducteur 14 est pliée pour se prolonger par une deuxième partie 24, de section similaire à la première 22, par exemple sensiblement à angle droit, ce qui facilite également les assemblages avec les appareils électriques 2, 10 comprenant le dispositif 20 selon l'invention.

Le dispositif de connexion 20 comprend en outre des moyens faisant ressort 26 permettant de solliciter la première partie 22 du conducteur 14 du dispositif 20 contre la plage de raccordement 8 de la borne 6 dans laquelle il est inséré. Un ressort hélicoïdal peut être utilisé ; cependant, pour faciliter l'insertion du dispositif de connexion 20 selon l'invention dans l'orifice 7, il est avantageux (figure 2C) d'utiliser une lame faisant ressort 26 dont la force et la forme sont adaptées pour permettre une déformation lors de l'insertion, puis un maintien dans la cage, éventuellement sans possibilité de retrait par une découpe appropriée pour le mode d'utilisation préféré dans lequel le dispositif de connexion 20 n'est utilisé qu'une fois, lors du montage du bloc différentiel 10. De façon générale, le ressort à lame 26 a une forme en V, une première branche 28 appuyant sur la première partie 22 de conducteur et une deuxième branche 28' appuyant dans une direction opposée symétrique ; un troisième brin 28" supérieur permet une insertion aisée dans l'orifice 7.

Pour faciliter la mise en place du conducteur 14 et des moyens faisant ressort 26 ainsi que la solidité de l'ensemble, il est avantageux que le dispositif de connexion 20 selon l'invention comprenne en outre un doigt 30 de maintien isolant, par exemple en plastique. De préférence et tel qu'illustré en figure 2D, le doigt 30 est de forme externe concordante avec la cage, et notamment parallélépipédique rectangle, avec un aménagement 32, par exemple un évidement, de placement de la première partie 22 du conducteur, des moyens, par exemple une liaison 34, 34' de type tenon/mortaise, de solidarisation du conducteur 14 dans son aménagement 32, et un logement 36 (figure 2E) de la lame ressort 26, notamment une cavité interne munie d'un passage 38 duquel débouchent la deuxième branche 28' de la lame 26. Le doigt 30 peut comprendre une embase 40 orthogonale à son axe de façon à faciliter la mise en place dans des supports et/ou appareillages.

Dans son utilisation préférée, le dispositif de connexion 20 est destiné à un raccordement permanent entre deux appareils électriques 2, 10 ; qui plus est, dans ces appareils de protection peuvent circuler des courants importants. Pour maintenir le conducteur 14 du dispositif de connexion et la plage 8 de la borne 6 en contact dans ces situations créant des forces de répulsion importantes, selon l'invention, la surface plane du conducteur 22 comprend au moins deux protubérances 42 en regard de la plage 8 de la borne 6. Selon le mode de réalisation préféré, deux protubérances 42 sont alignées dans le sens de conduction, c'est-à-dire le long de l'axe de la première partie 22 du conducteur 14, correspondant à l'axe du doigt 30. Cet agencement fait parcourir au courant deux voies parallèles de longueur utile prédéterminée (en fonction du calibre des appareils à connecter : notamment, pour un calibre 25 A, l'entraxe entre deux protubérances peut être de l'ordre de 8 à 9 mm), l'une dans le conducteur plan 22 et l'autre dans la plage fixe 8, de façon à créer une force d'attraction électrodynamique entre les deux ; cette force est d'autant plus forte que le courant est important, par exemple lors d'un court-circuit, auquel cas il n'y a alors pas de séparation entre les deux branches 8, 22 du circuit électrique : l'attraction électrodynamique créée compense la répulsion naturelle dans les valeurs de courant auxquelles le dispositif est confronté.

Pour optimiser cette action, il est préféré que le conducteur 14 du dispositif de connexion 20 soit réalisé dans le même matériau que la plage de raccordement 8 de la borne 6 dans laquelle il s'insère ; avantageusement, la première partie du conducteur 22 et la plage 8 sont également de section similaire, et leur planéité est optimisée - plus exactement, il est souhaitable que les deux lignes de courant délimitées par les protubérances 42 aient la même impédance, ou du moins soient dans un rapport 40/60. Cet équilibre des impédances permet une optimisation de la tenue électrodynamique du système de connexion par un équilibrage des résistances de contact. Ainsi, les protubérances 42 sont de préférence au nombre de deux par plage 8, bombées ou sphériques pour servir de points de contact, avantageusement recouvertes d'argent pour éviter les collages bien que l'étamage ou tout autre solution soit envisageable ; il est préféré que les protubérances 42 soient identiques, notamment en ce qui concerne leur géométrie et/ou leur état de surface. Le ressort 26 agit principalement au milieu des deux protubérances 42 de façon à générer une pression équilibrée sur ces zones de contact (figure 2E) ; en particulier, la lame ressort 26 est centrée sur un pion 26' et exerce un effort équidistant des deux contacts 42, dans un axe orthogonal à la première partie 22 du conducteur 14 et à la plage 8 de raccordement.

En évitant la répulsion lors d'un court-circuit et en maintenant le contact, le disjoncteur 2 est ainsi apte à couper efficacement le courant lors de ce défaut ; en outre, aucun arc électrique ne se produit, ce qui évite toute détérioration de la connexion électrique, et même de l'appareil 2. Cette configuration permet de limiter la force des moyens faisant ressort 26 nécessaire au maintien du contact : en particulier, moins de 20 N sont suffisants, alors que les vissages usuels nécessitent une force de l'ordre de 300 kg (3000 N).

Le dispositif 20 selon l'invention permet ainsi une connexion rapide et fiable, sans modification de l'appareil électrique 2 à connecter. De plus, les formes et composants du dispositif de connexion 20 sont simples à réaliser et peu coûteux. En outre, du fait du maintien d'une pression sensiblement constante au niveau du contact, aucun emballement thermique ne se produit, ce qui augmente la fiabilité et diminue les contraintes sur les matériaux. Par ailleurs, les coûts et les risques d'échauffement excessif sont également restreints par le fait qu'aucune maintenance de type serrage de vis dans les bornes n'est nécessaire.

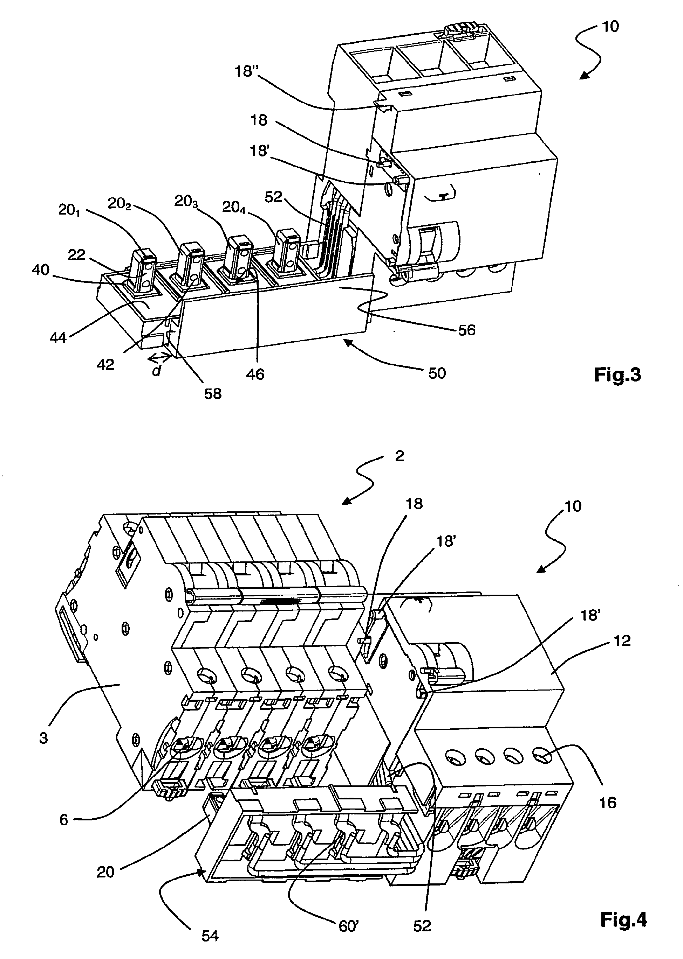

Le dispositif 20 selon l'invention peut être relié à des conducteurs souples pour former tout système adapté ; des systèmes de répartition comprenant plusieurs dispositifs 20 identiques peuvent ainsi être mis en oeuvre. De préférence, le dispositif 20 est configuré pour une connexion rapide multipolaire, et en particulier plusieurs dispositifs identiques 20₁, 20₂, 20₃, 20₄ sont associés par l'intermédiaire d'un socle 44 les maintenant en position prédéterminée. Par exemple, tel que présenté en figure 3, une plaque 44 plastique munie d'orifices 46 alignés à un pas de sensiblement 18 mm (±0,5 mm) permet le passage de quatre dispositifs de connexion 20, à l'exception d'une partie inférieure 40' (figure 1A) de leur embase 40, pour un raccordement tétrapolaire. Selon un mode de réalisation préféré, une tolérance dans la position prédéterminée est prévue, par exemple un jeu au niveau des passages 46 des doigts de maintien 30, de façon à permettre une insertion conjointe des dispositifs 20ᵢ de l'ensemble 50 malgré un écart entre leur position et l'agencement des bornes 6 d'un appareillage 2 en regard ; de préférence, cinq degrés de liberté sont acceptés, par jeu latéral sur chaque côté du passage 46 et tolérance de pivotement en profondeur entre l'embase 40' et le socle 44.

Dans un mode de réalisation préféré illustré en figures 3 et 4, l'ensemble de connexion 20 est associé à un appareil électrique 10. En particulier, les deuxièmes parties 24 de chaque conducteur 14 des dispositifs de connexion 20 sont mises en place sous le socle 44, parallèlement entre elles mais suffisamment écartées pour éviter tout problème diélectrique, et sont prolongées par des troisièmes parties 52 raccordées aux enroulements primaires d'un appareillage comme un bloc différentiel 10. Le socle 44 peut ainsi faire partie d'un boîtier accessoire 54 adapté pouvant se coupler au boîtier 12 du bloc différentiel 10, notamment un élément de même profondeur que les modules 2, 10 du système de protection 1 ; avantageusement, une paroi frontale 56 du boîtier accessoire 54 forme un écran qui se met en place face aux orifices 9 de serrage des bornes 6 d'un disjoncteur 2 et empêche tout accès à la vis et/ou aux éléments du dispositif de connexion 20.

Afin de faciliter le raccordement mécanique entre le bloc différentiel 10 muni de l'ensemble de connexion 50 selon l'invention et un disjoncteur 2, outre le jeu relatif des dispositifs de connexion 20, il est avantageux d'aménager l'accessoire 54 de raccordement de façon à prévoir un décalage entre les deux appareils 2, 10 lors du premier raccordement, qu'il soit électrique ou mécanique. En particulier, un mouvement relatif peut être prévu entre le socle 44 de l'ensemble de connexion 50 et le reste du boîtier auxiliaire 54, de façon à permettre un raccordement électrique avec le disjoncteur 2 « éloigné » du bloc différentiel 10, puis un rapprochement des deux appareils pour leur connexion mécanique - ou inversement. Il est par exemple possible de monter l'accessoire 54 de l'ensemble de connexion 50 d'une manière similaire à celle décrite dans les documents précités EP 1 000 430 ou EP 0 806 784. De préférence, pour rationaliser la fabrication des blocs de déclenchement 10 (ou autre appareillage) en ne modifiant aucun élément contenu dans leur boîtier 22, selon l'invention, le boîtier auxiliaire 54 lui-même est aménagé pour permettre le mouvement relatif.

En particulier, selon un mode de réalisation préféré de l'invention et tel qu'illustré en figure 3, le socle 44 est monté coulissant dans un support 58 faisant tiroir : la forme du support 58 coopère avec la base du socle 44, par exemple par un système en queue d'aronde, pour déplacer les dispositifs de connexion 20 parallèlement au plan des bornes 6 (correspondant ici à la deuxième partie des conducteurs 24). Une butée est avantageusement mise en place : en particulier, un débattement d de l'ordre de 5 à 8 mm écartant les dispositifs de connexion 20 de la troisième partie 52 des conducteurs est suffisant pour éviter tout conflit entre les faces latérales des appareils 2, 10 à raccorder.

Pour permettre le déplacement des dispositifs de connexion 20, c'est-à-dire de la première partie 22 des conducteurs fixe par rapport au disjoncteur 2, par rapport à la troisième partie 52 des conducteurs fixe par rapport au bloc 10, les conducteurs 14 comprennent avantageusement deux portions rigides couplées électriquement entre elles par tout moyen 60, 60' permettant leur mouvement relatif. En particulier, une tresse 60 (figure 2E) peut être utilisée, ou un contact glissant ou pivotant 60' (figure 4), voire tout simplement, pour les petits calibres, la souplesse des conducteurs 14.

Ainsi, dans ce mode de réalisation, pour raccorder un bloc différentiel 10 muni de l'accessoire 54 précédent à un disjoncteur modulaire 2, le socle 44 est d'abord écarté du bloc différentiel 10, puis le disjoncteur 2 est embroché sur les dispositifs de connexion 20 ; le socle 44 est ensuite repoussé dans le tiroir 58 pour accoler les deux appareils 2, 10 et insérer les ergots 18' de positionnement et autres éléments de couplage mécanique de type barre de déclenchement 18, puis les moyens de solidarisation mécanique 18" sont mis en oeuvre de sorte que les deux appareils 2, 10 sont couplés, de préférence de façon inviolable. Le montage s'effectue ainsi avec complète dissociation des couplages électriques et mécaniques ; qui plus est, la forme de l'accessoire 54 et/ou des doigts 30 sert de détrompage dans le montage. L'accessoire 54 solidaire du boîtier 12 permet en outre de compenser tout effet de glissement éventuel tendant à déplacer les dispositifs de connexion 20 hors des cages par dégradation du comportement de contact en cas de très fort courant de court-circuit.

Il serait possible de monter l'accessoire 54 en rotation, voire de se contenter du jeu des dispositifs de connexion 20 par rapport à leur socle 44.

Bien que l'invention ait été décrite en référence à la connexion d'un bloc différentiel 10 sur un disjoncteur modulaire tétrapolaire 2, elle ne s'y limite pas : d'autres éléments peuvent être concernés. En particulier, le disjoncteur 2 et le bloc différentiel 10 peuvent comprendre un nombre différent de pôles ; le disjoncteur 2 peut ne pas être modulaire mais comprendre tous ses mécanismes de coupure au sein d'un même boîtier 3, moulé ou non. Plus généralement, le dispositif de connexion 20 selon l'invention peut être utilisé pour relier électriquement borne à borne d'autres appareillages électriques, comme des minuteries sur des contacteurs, des télérupteurs,... ; même si l'invention s'applique particulièrement à des appareils électriques notamment modulaires, montés contigus sur un rail d'installation 4, et destinés à être raccordés électriquement, le dispositif de connexion 20 peut également être utilisé pour raccorder électriquement un appareil électrique à un peigne adapté ou tout dispositif de répartition.

## Revendications

1. Dispositif de connexion électrique (20), destiné à être inséré dans une borne (6) comprenant une cage ouverte dans laquelle s'étend une plage de raccordement (8) sensiblement plane d'un appareil électrique (2), comprenant :
- un conducteur électrique (14) avec une première partie d'extrémité (22) plane destinée à être insérée dans la cage de la borne (6) de sorte qu'une de ses surfaces fasse face à la plage (8) de la borne (6), le dispositif étant **caractérisé en ce qu'**il comprend
- au moins deux protubérances (42) sur ladite surface de la première partie du conducteur (22), et
- des moyens faisant ressort (26) pour contraindre ladite surface de la première partie (22) du conducteur (14) vers la plage (8) de la borne (6), de sorte que le contact entre la plage (8) de la borne (6) et la première partie du conducteur (22) se produise par les protubérances (42).

2. Dispositif de connexion (20) selon la revendication 1 dans lequel les protubérances (42) sont identiques.

3. Dispositif de connexion (20) selon l'une des revendications 1 ou 2 dans lequel la surface de la première partie du conducteur (22) comprend deux protubérances (42) disposées le long d'une direction d'insertion dans la cage.

4. Dispositif de connexion (20) selon la revendication 3 dans lequel les moyens faisant ressort (26) sont adaptés à contraindre ladite surface de la première partie du conducteur (22) au centre des deux protubérances (42).

5. Dispositif de connexion (20) selon l'une des revendications 3 ou 4 dans lequel les moyens faisant ressort (26) comprennent un ressort à lame centré apte à exercer une force orthogonale à ladite surface de la première partie du conducteur (22).

6. Dispositif selon l'une des revendications 1 à 5 comprenant en outre un doigt (30) de maintien rigide en matériau isolant s'étendant le long d'un axe pouvant être inséré dans la cage de la borne (6), le doigt de maintien (30) comprenant des moyens (32, 36) pour supporter la première partie d'extrémité (22) du conducteur (14) et les moyens faisant ressort (26) dans une position prédéterminée.

7. Dispositif selon la revendication 6 dans lequel le doigt de maintien (30) est sensiblement parallélépipédique rectangle, comprenant un évidement longitudinal (32) servant de support à ladite première partie d'extrémité (22) et un logement (36) pour une lame faisant ressort (26).

8. Ensemble de connexion électrique (50) comprenant une pluralité de dispositifs de connexion (20) selon l'une des revendications 1 à 7 et un socle (44) avec des moyens de solidarisation (46) desdits dispositifs (20) en position prédéterminée.

9. Ensemble de connexion (50) comprenant une pluralité de dispositifs de connexion (20) identiques selon la revendication 6 ou 7 et un socle plan (44) avec des moyens (46) pour solidariser les doigts de maintien (30) orthogonalement au socle (44).

10. Ensemble de connexion (50) selon la revendication 9 dans lequel les moyens de solidarisation (46) sont adaptés pour avoir un jeu dans le positionnement relatif des doigts (30) de chaque dispositif de connexion (20).

11. Ensemble de connexion (50) selon l'une des revendications 9 ou 10 dans lequel les moyens de solidarisation comprennent un support (58) par rapport auquel le socle (44) peut coulisser.

12. Ensemble de connexion (50) selon la revendication 11 dans lequel les conducteurs (14) comprennent une première et une deuxième portions mobiles l'une par rapport à l'autre, la première portion étant solidaire du socle (44) et la deuxième étant solidaire du support (58).

13. Bloc de protection différentielle (10) comprenant un ensemble de connexion (50) selon l'une des revendications 11 à 12, le support (58) et le socle (44) de l'ensemble de connexion (50) formant un accessoire (54) couplé à une face du boîtier (22) du bloc.

14. Bloc de protection différentielle selon la revendication 13 dans lequel l'accessoire (58) comprend une paroi frontale (56) saillante par rapport au socle coulissant (44).

## Claims

1. An electric connection device (20) designed to be inserted in a terminal (6) comprising an open tunnel in which a substantially flat connection strip (8) of an electric equipment unit (2) extends, comprising:
- an electric conductor (14) with a flat first end part (22) designed to be inserted in the tunnel of the terminal (6) so that one of its surfaces is facing the strip (8) of the terminal (6), the device being **characterized in that** it comprises
- at least two protuberances (42) on said surface of the first part of the conductor (22), and
- means forming a spring (26) to bias said surface of the first part (22) of the conductor (14) towards the strip (8) of the terminal (6) so that contact between the strip (8) of the terminal (6) and the first part of the conductor (22) takes place via the protuberances (42).

2. The connection device (20) according to claim 1 wherein the protuberances (42) are identical.

3. The connection device (20) according to one of claims 1 or 2 wherein the surface of the first part of the conductor (22) comprises two protuberances (42) arranged along an insertion direction in the tunnel.

4. The connection device (20) according to claim 3 wherein means forming a spring (26) are designed to bias said surface of the first part of the conductor (22) to the centre of the two protuberances (42).

5. The connection device (20) according to one of claims 3 or 4 wherein the means forming a spring (26) comprise a centred leaf spring designed to exert a force orthogonal to said surface of the first part of the conductor (22).

6. The device according to one of claims 1 to 5 further comprising a rigid securing finger (30) made from insulating material extending along an axis able to be inserted in the tunnel of the terminal (6), the securing finger (30) comprising means (32, 36) for supporting the first end part (22) of the conductor (14) and the means forming a spring (26) in a predefined position.

7. The device according to claim 6 wherein the securing finger (30) is substantially a rectangular parallelepiped comprising a longitudinal recess (32) acting as support for said first end part (22) and a housing (36) for a leaf forming a spring (26).

8. An electric connection assembly (50) comprising a plurality of connection devices (20) according to one of claims 1 to 7 and a plinth (44) with means (46) for securing said devices (20) in a predefined position.

9. The connection assembly (50) comprising a plurality of identical connection devices (20) according to claim 6 or 7 and a flat plinth (44) with means (46) for securing the securing fingers (30) orthogonally to the plinth (44).

10. The connection assembly (50) according to claim 9 wherein the means (46) for securing are adjusted so as to have a clearance in the relative positioning of the fingers (30) of each connection device (20).

11. The connection assembly (50) according to one of claims 9 or 10 wherein the means for securing comprise a support (58) with respect to which the plinth (44) can slide.

12. The connection assembly (50) according to claim 11 wherein the conductors (14) comprise first and second portions movable with respect to one another, the first portion being securedly attached to the plinth (44) and the second portion being securedly attached to the support (58).

13. A differential protection unit (10) comprising a connection assembly (50) according to one of claims 11 to 12, the support (58) and plinth (44) of the connection assembly (50) forming an accessory (54) coupled with a panel of the case (22) of the unit.

14. The differential protection unit according to claim 13 wherein the accessory (58) comprises a front panel (56) salient with respect to the sliding plinth (44).

## Patentansprüche

1. Elektrisches Verbindungselement (20) zur Einführung in eine Klemme (6) mit offenem Käfig, in dem eine annähernd ebene Anschlussfahne (8) eines elektrischen Schaltgeräts (2) angeordnet ist, welches Verbindungselement einen elektrischen Leiter (14) mit einem ersten flachen Endabschnitt (22) umfasst, der dazu dient, so in die Klemme (6) eingesetzt zu werden, dass eine seiner Oberflächen der Anschlussfahne (8) der Klemme (6) gegenüber liegt, wobei das Verbindungselement **dadurch gekennzeichnet ist, dass** es mindestens zwei in der genannten Oberfläche des ersten Leiterabschnitts (22) ausgebildete Vorsprünge (42) sowie
als Federelement dienende Mittel (26) zur Beaufschlagung der genannten Oberfläche des ersten Abschnitts (22) des Leiters (14) in Richtung der Anschlussfahne (8) der Klemme (6) umfasst, derart dass die Kontaktgabe zwischen der Anschlussfahne (8) der Klemme (6) und dem ersten Leiterabschnitt (22) über die Vorsprünge (42) erfolgt.

2. Verbindungselement (20) nach Anspruch 1, bei dem die Vorsprünge (42) gleich ausgebildet sind.

3. Verbindungselement (20) nach einem der Ansprüche 1 oder 2, bei dem in der Oberfläche des ersten Leiterabschnitts (22) zwei Vorsprünge (42) ausgebildet sind, die in einer Achse zur Einführung in den Käfig liegen.

4. Verbindungselement (20) nach Anspruch 3, bei dem die als Federelement dienenden Mittel (26) so ausgebildet sind, dass sie die genannte Oberfläche des ersten Leiterabschnitts (22) in der Mitte zwischen den beiden Vorsprüngen (42) beaufschlagen.

5. Verbindungselement (20) nach einem der Ansprüche 3 oder 4, bei der die als Federelement dienenden Mittel (26) eine zentrierte Blattfeder umfassen, die in der Lage ist, eine Kraft senkrecht zur genannten Oberfläche des ersten Leiterabschnitts (22) auszuüben.

6. Verbindungselement nach einem der Ansprüche 1 bis 5, das außerdem einen biegesteifen Isolierstoff-Halteblock (30) umfasst, der in einer Achse zur Einführung in den Käfig der Klemme (6) angeordnet ist, welcher Halteblock (30) Mittel (32, 36) zur Halterung des ersten Endabschnitts (22) des Leiters (14) und der als Federelement dienenden Mittel (26) in einer bestimmten Stellung umfasst.

7. Verbindungselement nach Anspruch 6, bei dem der Halteblock (30) annähernd kastenförmig ausgebildet ist und eine Längsaussparung (32) zur Halterung des genannten ersten Endabschnitts (22) sowie eine Aufnahme (36) für ein Blattfederelement (26) umfasst.

8. Elektrisches Verbindungssystem (50), welches mehrere Verbindungselemente (20) nach einem der Ansprüche 1 bis 7 sowie einen Sockel (44) mit Mitteln (46) zur Befestigung der genannten Verbindungselemente (20) in einer bestimmten Stellung umfasst.

9. Verbindungssystem (50), das mehrere identische Verbindungselemente (20) nach Anspruch 6 oder 7 sowie einen flachen Sockel (44) mit Mitteln (46) zur senkrechten Befestigung der Halteblöcke (30) auf dem Sockel (44) umfasst.

10. Verbindungssystem (50) nach Anspruch 9, bei dem die Befestigungsmittel (46) so ausgebildet sind, dass sie ein relatives Positionierspiel der einzelnen Halteblöcke (30) jedes Verbindungselements (20) erlauben.

11. Verbindungssystem (50) nach einem der Ansprüche 9 oder 10, bei dem die Befestigungsmittel einen Träger (58) umfassen, auf dem der Sockel (44) gleitend verschoben werden kann.

12. Verbindungssystem (50) nach Anspruch 11, bei dem die Leiter (14) einen ersten und einen zweiten Abschnitt umfassen, die relativ zueinander bewegbar sind, wobei der erste Abschnitt fest mit dem Sockel (44) und der zweite Abschnitt fest mit dem Träger (58) verbunden ist.

13. Differenzstrom-Schutzblock (10) mit einem Verbindungssystem (50) nach einem der Ansprüche 11 bis 12, bei dem der Träger (58) und der Sockel (44) des Verbindungssystems (50) als an einer Seite des Gehäuses (22) des Differenzstromblocks angebautes Zubehörteil (54) ausgebildet sind.

14. Differenzstrom-Schutzblock nach Anspruch 13, bei dem das Zubehörteil (58) eine aus dem Gleitsockel (44) hervorstehende Vorderwand (56) aufweist.
